**Europäisches Patentamt**

**European Patent Office**

**Office européen des brevets**

(11) Veröffentlichungsnummer: **0 672 457 A2**

## (12) EUROPÄISCHE PATENTANMELDUNG

(21) Anmeldenummer: **95103667.2**

(51) Int. Cl.⁶: **B03B 9/06**, B09B 5/00

(22) Anmeldetag: **14.03.95**

(30) Priorität: **15.03.94 DE 4408716**

(43) Veröffentlichungstag der Anmeldung:
**20.09.95 Patentblatt 95/38**

(84) Benannte Vertragsstaaten:
**AT BE CH DE DK ES FR GB GR IT LI LU NL PT SE**

(71) Anmelder: **METALLGESELLSCHAFT AG**
**Reuterweg 14**
**D-60323 Frankfurt am Main (DE)**

(72) Erfinder: **Bracker, Gerd-Peter, Dr.**
**Heggerstrasse 38**
**D-45525 Hattingen (DE)**
Erfinder: **Kühl, Manfred**
**Lindenstrasse 250**
**D-40235 Düsseldorf (DE)**

(54) **Verfahren zur rückstandsfreien Abfallbehandlung.**

(57) In der vorliegenden Erfindung wird ein Verfahren zur rückstandsfreien Abfallbehandlung beschrieben, wobei
a) der Abfall in drei Fraktionen getrennt wird, wobei eine Feinfraktion mit einer Korngröße von < 100 mm als Siebdurchgang ausgetragen, eine Grobfraktion als Siebüberlauf erhalten und eine Leichtfraktion abgesaugt wird,
b) die Feinfraktion gemäß Verfahrensstufe (a) der Kompostierung zugeführt wird,
c) die Leichtfraktion gemäß Verfahrensstufe (a) auf eine Korngröße < 100 mm zerkleinert und anschließend in den gasförmigen Zustand überführt wird,
d) die Grobfraktion gemäß Verfahrensstufe (a) von eisenhaltigen Stoffen befreit, von Schwerstoffen befreit, auf eine Korngröße von < 100 mm zerkleinert und anschließend in den gasförmigen Zustand überführt wird,
e) die Gase aus den Stufen der Vergasung gemäß den Verfahrensstufen (c) und (d) gewonnen werden,
f) die Rückstände aus der Vergasung gemäß den Verfahrensstufen (c) und (d) eingeschmolzen werden.

EP 0 672 457 A2

Fig. 1

Die vorliegende Erfindung betrifft ein Verfahren zur rückstandsfreien Abfallbehandlung.

Sehr effektiv ist die Verbrennung als Verfahren zur Abfallbehandlung. Hier sind es jedoch die Rückstände insbesondere aus der Rauchgasreinigung, die aufgrund der hohen Schadstoffkonzentration viele Probleme bei der Ablagerung bzw. Nachbehandlung bereiten. Hierüber wird z.B. in "Die Entsorgung von Rückständen aus der Rauchgasreinigung bei KVA" von H.P. Farni in Abfall-Spektrum, 2/92 (1992), S. 5-7, berichtet.

Aus dem Artikel "Müllverstromung in der zirkulierenden Wirbelschicht" von H. Mielke und M. Woelke in Müllverbrennung und Entsorgung, 10/91 (1991), S. 40-45, ist es bekannt, die Abfälle in der zirkulierenden Wirbelschicht zu vergasen. Der Nachteil dieses Verfahrens liegt darin, daß der Vergaser mit sehr vielen nassen und inerten Komponenten beaufschlagt wird.

Die Aufgabe der vorliegenden Erfindung ist es, Abfall umweltschonend und wirtschaftlich für eine Vergasung oder Pyrolyse vorzubehandeln und die Vergasung oder Pyrolyse umweltschonend und wirtschaftlich durchzuführen, wobei die Schadstoffe in den Abgasen unterhalb den gesetzlich vorgeschriebenen Höchstwerten liegen und der Abfall rückstandsfrei verwertet wird.

Die Aufgabe der vorliegenden Erfindung wird dadurch gelöst, daß

a) der Abfall in drei Fraktionen getrennt wird, wobei eine Feinfraktion mit einer Korngröße von < 100 mm als Siebdurchgang ausgetragen, eine Grobfraktion als Sieböberlauf erhalten und eine Leichtfraktion abgesaugt wird,

b) die Feinfraktion gemäß Verfahrensstufe (a) der Kompostierung zugeführt wird,

c) die Leichtfraktion gemäß Verfahrensstufe (a) auf eine Korngröße < 100 mm zerkleinert und anschließend in den gasförmigen Zustand überführt wird,

d) die Grobfraktion gemäß Verfahrensstufe (a) von eisenhaltigen Stoffen befreit, von Schwerstoffen befreit, auf eine Korngröße von < 100 mm zerkleinert und anschließend in den gasförmigen Zustand überführt wird,

e) die Gase aus den Stufen der Vergasung gemäß den Verfahrensstufen (c) und (d) gewonnen werden,

f) die Rückstände aus der Vergasung gemäß den Verfahrensstufen (c) und (d) eingeschmolzen werden.

Bei dem Abfall, der erfindungsgemäß behandelt wird, handelt es sich um unsortierten Abfall, insbesondere Hausmüll, der alle Komponenten enthält, wobei keine gesonderte Biomüllerfassung durchgeführt werden muß. Für die Sortierung wird eine Sortiertrommel eingesetzt, die aus dem deutschen Patent Nr. 28 49 509 bekannt ist. Erfindungsgemäß wird der Abfall nach der Aufgabe in die Sortiertrommel teilweise zerkleinert, wobei Gebinde, z.B. Plastiktüten, aufgeschlossen werden. Anschließend wird der relativ schwere und nasse Feinmüll als Siebdurchgang abgetrennt. Schwere Grobstücke verlassen als Sieböberlauf die Trommel. Aus beiden Fraktionen können eisenhaltige Stoffe abgetrennt werden. Das geschieht erfindungsgemäß durch Magnetscheider. Die Leichtfraktion wird mittels Unterdruck aus der Siebtrommel abgesaugt und von der Transportluft abgetrennt, was erfindungsgemäß in einem Zyklon geschieht. Zur Erzeugung des notwendigen Luftvolumenstroms aus der Trommel dient ein Gebläse, welches auf der Rohgasseite des zusätzlichen Staubabscheiders installiert ist. Die flugfähige Leichtfraktion besteht im wesentlichen aus Papier, Pappe, Kunststofffolien und Textilien.

Die Zusammensetzung der Leichtfraktion geht aus der nachstehend aufgeführten Tabelle hervor:

| Bestandteile | Gew.-% |
|---|---|
| Wasser | 6,8 - 28,4 |
| Asche | 9,3 - 15,3 |
| Kohlenstoff | 29,9 - 47,8 |
| Wasserstoff | 3,77 - 6,92 |
| Schwefel | 0,11 - 0,32 |
| Stickstoff | 0,15 - 0,45 |
| Sauerstoff | 26,88 - 29,34 |
| Flüchtige | 51,6 - 63,8 |
| Chlor gesamt | 0,15 - 0,49 |
| Chlor wasserlöslich | 0,09 - 0,17 |

| Schwermetalle | µg/g |
|---|---|
| Cadmium | 0,56 - 2,2 |
| Blei | 73 - 118 |
| Quecksilber | < 0,01 - 0,19 |
| Zink | 86 - 359 |
| Thallium | < 0,05 - 1,08 |
| Arsen | < 1,0 - 16,8 |
| Beryllium | < 0,05 - 1,01 |
| Chrom | 15 - 70 |
| Nickel | 10 - 34 |

Die Zusammensetzung der Feinfraktion mit einer Korngröße von < 100 mm, also des Siebdurchgangs, geht aus der nachstehend aufgeführten Tabelle hervor:

| Bestandteile | Gew.-% |
|---|---|
| Wasser | 22,1 - 32,1 |
| Asche | 44,8 - 54,3 |
| Kohlenstoff | 12,1 - 23,3 |
| Wasserstoff | 0,51 - 2,1 |
| Schwefel | 0,14 - 0,39 |
| Stickstoff | 0,35 - 0,66 |
| Sauerstoff | 5,3 - 9,4 |
| Flüchtige | 10,0 - 20,0 |
| Chlor gesamt | 0,12 - 0,24 |
| Chlor wasserlöslich | 0,08 - 0,21 |

| Schwermetalle | µg/g |
|---|---|
| Cadmium | 0,85 - 1,6 |
| Blei | 74 - 236 |
| Quecksilber | 0,06 - 0,51 |
| Zink | 149 - 1012 |
| Thallium | 0,65 - 1,28 |
| Arsen | 11,2 - 27,3 |
| Beryllium | 0,60 - 1,08 |
| Chrom | 41 - 54 |
| Nickel | 20 - 144 |

Die Zusammensetzung der Grobfraktion und damit des Siebüberlaufs ist naturgemäß starken Schwankungen unterworfen. Die Grobfraktion enthält inerte Materialien wie Steine, Glas, Metalle und organische Stoffe wie Kartoffeln, Apfelsinen oder Hartkunststoffteile.

Die Feinfraktion und damit der Siebdurchgang wird erfindungsgemäß einer Kompostierung zugeführt. Die Feinfraktion kann, falls erforderlich, von eisenhaltigen Stoffen befreit werden. Der Kompost wird bevorzugt als Bodenverbesserer verwendet. Der Kompost kann auch als Deponieabdeckmaterial genutzt werden. Die Grobfraktion wird gemäß Verfahrensstufe (d) zur Entfernung von Schwerstoffen nach einer Entschrottung erfindungsgemäß einer ballistischen Trennung unterzogen; das geschieht z.B. in einem Happle-Sichter. Bei der ballistischen Trennung werden anorganische Grobteile, wie Steine und Glas, abgetrennt.

Je nach den Gegebenheiten kann die Siebtrommel durch Veränderung der Siebfläche und der Trommelneigung an die erforderlichen Bedingungen angepaßt werden. Weiterhin können in der Siebtrommel die Stoffströme qualitativ und quantitativ erfindungsgemäß durch Änderung des Siebdurchmessers, Wechsel der Siebbeläge, der Trommeldrehzahl, der Trommelneigung und des Unterdrucks, optimiert werden. Erfindungsgemäß wird durch diese Maßnahmen eine qualitative Optimierung der einzelnen Stoffströme am Austrag erreicht.

Die Leichtfraktion hat üblicherweise eine Schüttdichte von etwa 50 kg/m³ und wird erfindungsgemäß in einer Schneidmühle zerkleinert. Die Grobfraktion und damit der Siebüberlauf wird erfindungsgemäß in einer Hammermühle zerkleinert. Beide Fraktionen werden getrennt oder nach einer vorherigen Vereinigung einem Vergaser zugeführt und dort gemäß den Verfahrensstufen (c) und (d) in den gasförmigen Zustand überführt.

Der Vergaser kann ein Drehrohrofen, ein Fließbettofen, eine stationäre oder zirkulierende Wirbelschicht sein. Bevorzugt wird eine zirkulierende Wirbelschicht. Als Fluidisierungsgas dient Luft, mit Sauerstoff angereicherte Luft oder technisch reiner Sauerstoff.

Die beiden Fraktionen, nämlich die gemäß Verfahrensstufe (c) zerkleinerte Leichtfraktion und die gemäß Verfahrensstufe (d) zerkleinerte Grobfraktion, werden bevorzugt getrennt in den Vergaser eingetragen. Die Leichtfraktion wird mit einer wassergekühlten Schnecke eingetragen. Die Grobfraktion wird eingeblasen oder mechanisch eingetragen.

Das energetisch nutzbare Synthesegas gemäß Verfahrensstufe (e) besteht im wesentlichen aus den Komponenten Wasserstoff, Methan, Kohlenmonoxid, Kohlendioxid und Wasserdampf mit Stickstoff als Ballast, entsprechend der Wahl des Wirbelmediums und kann daher weiterverwendet werden.

Die Rückstände der Verfahrensstufen (c) und (d) werden erfindungsgemäß einer Einschmelzung zugeführt. Die Rückstände gemäß Verfahrensstufe (f) sind ein verwertbares Schlackengranulat.

Eine bevorzugte Ausgestaltung der Erfindung ist, daß die Feinfraktion mit einer Korngröße von < 60 mm ausgetragen wird. Durch die Abtrennung der Feststoffe mit einer Korngröße von > 60 mm wird die Feinfraktion von Steinen, Glas und anderen Schwerstoffen weitgehend befreit.

Eine bevorzugte Ausgestaltung der Erfindung ist, daß die Feinfraktion gemäß Verfahrensstufe (a) vor der Kompostierung einer weiteren Siebung unterzogen wird, wobei Material mit einer Korngröße von < 15 mm abgesiebt wird. Die Feinfraktion kann hierdurch von Schwermetallanteilen befreit werden. Die Fraktion < 15 mm enthält hohe Schwermetallanteile und nur geringe Anteile an organischer Substanz. Diese abgetrennte Fraktion kann deponiert oder vorzugsweise eingeschmolzen werden. Die Restfraktion mit einer Korngröße von > 15 mm kann besonders bevorzugt der Kompostierung zugeführt werden.

Eine bevorzugte Ausgestaltung der Erfindung ist, daß die Leichtfraktion gemäß Verfahrensstufe (c) und die Grobfraktion gemäß Verfahrensstufe (d) auf eine Korngröße < 50 mm zerkleinert werden. Bei einer Korngröße von < 50 mm für die Leicht- und Grobfraktion werden sehr gute Ergebnisse bei der Vergasung der Abfälle erzielt.

Eine bevorzugte Ausgestaltung der Erfindung ist, daß die Vergasung gemäß den Verfahrensstufen (c) und (d) im System einer stationären oder zirkulierenden Wirbelschicht erfolgt. Wie vorstehend bereits dargelegt, werden bei der Vergasung gemäß den Verfahrensstufen (c) und (d) im System einer stationären Wirbelschicht sehr gute Ergebnisse erzielt. Ganz besonders gute Ergebnisse für die Vergasung gemäß den Verfahrensstufen (c) und (d) werden im System einer zirkulierenden Wirbelschicht erzielt.

Das System der zirkulierenden Wirbelschicht besteht aus dem Wirbelschichtreaktor, dem Rückführzyklon und dem Rückführsystem. Dieses Wirbelschichtprinzip zeichnet sich dadurch aus, daß im Unterschied zur "klassischen" Wirbelschicht, bei der eine dichte Phase durch einen deutlichen Dichtesprung von dem darüber befindlichen Gasraum getrennt ist, Verteilungszustände ohne definierte Grenzschicht vorliegen. Ein Dichtesprung zwischen dichter Phase und darüber befindlichem Staubraum ist nicht vorhanden, jedoch nimmt innerhalb des Reaktors die Feststoffkonzentration von unten nach oben ständig ab. Aus dem oberen Teil des Reaktors wird eine Gas-Feststoff-Suspension ausgetragen. Bei der Definition der Betriebsbedingungen über die Kennzahlen von Froude und Archimedes ergeben sich die Bereiche:

$$0,1 \leq 3/4 \cdot Fr^2 \cdot \frac{\rho_g}{\rho_k - \rho_g} \leq 10 ,$$

bzw.

$$0,01 \leq Ar \leq 100 ,$$

wobei

5

$$Ar = \frac{d_k^3 \cdot g \ ( \rho_k - \rho_g)}{g \cdot \nu^2}$$

und

$$Fr^2 = \frac{u^2}{g \cdot d_k}$$

sind.

Es bedeuten:

u die relative Gasgeschwindigkeit in m/s

Ar die Archimedes-Zahl

Fr die Froude-Zahl

$\rho_g$ die Dichte des Gases in kg/m$^3$

$\rho_k$ die Dichte des Feststoffteilchens in kg/m$^3$

$d_k$ den Durchmesser des kugelförmigen Teilchens in m

$\nu$ die kinematische Zähigkeit in m$^2$/s

g die Gravitationskonstante in m/s$^2$

Die aus dem Wirbelschichtreaktor ausgetragene Suspension wird in den Rückführzyklon der zirkulierenden Wirbelschicht geleitet, dort weitgehend vom Feststoff befreit, und der abgeschiedene Feststoff wird derart in den Wirbelschichtreaktor zurückgeleitet, daß innerhalb der zirkulierenden Wirbelschicht der stündliche Feststoffumlauf mindestens das Vierfache des im Wirbelschichtreaktor befindlichen Feststoffgewichtes beträgt.

Für die Vergasung im System einer stationären oder zirkulierenden Wirbelschicht genügt es, die Leicht- und die Grobfraktion auf eine Korngröße von < 50 mm zu zerkleinern.

Eine bevorzugte Ausgestaltung der Erfindung ist, daß in das System der stationären oder zirkulierenden Wirbelschicht als Fluidisierungsgas Luft, mit Sauerstoff angereicherte Luft oder technischer Sauerstoff eingeleitet werden.

Eine bevorzugte Ausgestaltung der Erfindung ist, daß die Vergasungstemperatur gemäß den Verfahrensstufen (c) und (d) 800 ° C bis 1000 ° C beträgt. In diesem Temperaturbereich werden gute Ergebnisse für die Vergasung der Leicht- und Grobfraktion erreicht.

Eine besonders bevorzugte Ausgestaltung der Erfindung ist, daß die Vergasungstemperatur gemäß den Verfahrensstufen (c) und (d) 850 ° C bis 950 ° C beträgt. In diesem Temperaturbereich werden ganz besonders gute Werte für die Vergasung der Leicht- und Grobfraktion erhalten.

Erfindungsgemäß ist vorgesehen, daß die Leichtfraktion gemäß Verfahrensstufe (a) in Abwandlung der Verfahrensstufe (c) nach einer Zerkleinerung pyrolysiert wird, und die Grobfraktion gemäß Verfahrensstufe (a) in Abwandlung der Verfahrensstufe (d) nach der Abtrennung von eisenhaltigen Stoffen und Schwerstoffen und der Zerkleinerung pyrolysiert wird. Die Beschickungsvorrichtung wird in an sich bekannter Weise als Doppelpendelklappe ausgeführt, um einen Luftabschluß zum Reaktionsraum zu erzeugen.

Eine bevorzugte Ausgestaltung der Erfindung ist, daß die Pyrolyse in einem von außen beheizten Drehrohr bei einer Temperatur von 400 bis 900 ° C, vorzugsweise 450 bis 550 ° C, durchgeführt wird. Bei der Verwendung eines von außen beheizten Drehrohres werden besonders gute Ergebnisse für die Pyrolyse der Leicht- und Grobfraktion erhalten.

Eine bevorzugte Ausgestaltung der Erfindung ist, daß die Pyrolyse im System einer stationären Wirbelschicht bei einer Temperatur von 400 bis 900 ° C, vorzugsweise von 450 bis 550 ° C, durchgeführt wird. Bei der Verwendung einer stationären Wirbelschicht werden gute Ergebnisse bei der Pyrolyse der Leicht- und Grobfraktion erzielt. Erfindungsgemäß ist für die Pyrolyse neben einer indirekt beheizten Drehtrommel und einer Wirbelschicht auch ein indirekt beheiztes Fließbett und ein Autoklav vorgesehen.

Vorgesehen ist auch ein System aus zwei Wirbelschichten, wobei eine oxidierend betrieben wird.

Eine bevorzugte Ausgestaltung der Erfindung ist, daß ein Teilstrom des Abgases aus der Vergasung gemäß den Verfahrensstufen (c) und (d) in die Einschmelzung gemäß Verfahrensstufe (f) eingeleitet wird und das Restgas aus der Vergasung verbrannt wird. Der Teilgasstrom wird somit vorteilhafterweise als Stützbrennstoff für die Einschmelzung genutzt. Da die Einschmelzstufe aufgrund der Stoffzusammensetzung der Eingangsstoffe ein Energiedefizit haben kann, kann somit bevorzugt das erzeugte Synthesegas oder Produktgas als Zusatzbrennstoff genutzt werden. Das Restgas wird in einer Nebenbrennkammer der Einschmelzanlage zur Energieerzeugung verbrannt. Das Restgas stellt ein Überschußgas dar, das somit vorteilhafterweise zur Energieerzeugung verbrannt werden kann. Darüber hinaus werden durch diese Anordnung zwei parallele Gasreinigungen, nämlich die des Synthesegases und des Rauchgases, vermieden, was einen großen Vorteil des erfindungsgemäßen Verfahrens darstellt.

Eine bevorzugte Ausgestaltung der Erfindung ist, daß die Vergasung soweit im Druckbetrieb durchgeführt wird, daß das Produktgas ohne zusätzliche Druckerhöhung in einen Einschmelzofen und/oder in eine Brennkammer eingeleitet und verbrannt wird. Das Produktgas wird bei einem Druck > 1 bar in den Einschmelzofen oder in die Nachbrennkammer eingeleitet. Dadurch werden Widerstände der Rohrleitungen und des Brenners überwunden.

Eine bevorzugte Ausgestaltung der Erfindung ist, daß die Feinfraktion gemäß Verfahrensstufe (a) vor der Kompostierung einer weiteren Siebung unterzogen wird, wobei Material mit einer Korngröße < 15 mm abgesiebt, von inerten Bestandteilen befreit und anaerob fermentiert wird. Die Feinfraktion mit einer Korngröße < 15 mm wird bevorzugt einem hydraulischen Stofflöser zugeführt. Dieser Stofflöser führt die Trennung des Inertmaterials vom nativorganischen durch, indem die Lösbarkeit und/oder die Benetzbarkeit des organischen Materials ausgenutzt wird. Die Inertstoffe sinken nach unten und werden am Boden des Stofflösers, beispielsweise mit einer Gegenstromschleuse, abgezogen. Die Inertstoffe finden im Wegebau oder auch in Kabeltrassen Verwendung.

Das suspendierte organische Material wird anaerob weiterbehandelt. Diese Anaerobstufe kann sowohl einstufig als auch zweistufig arbeiten, wobei die Hydrolyse und saure Gärung im ersten und die acetogene Phase und Methanbildung in einem zweiten Reaktor erfolgt. Die Zweistufigkeit hängt von der mikrobiologischen anaeroben Umsetzung organischer Stoffe ab, die in mehreren Phasen abläuft. Dabei werden zunächst makromolekulare Verbindungen hydrolysiert und sauer vergoren. Hierbei entstehen bei Bildung eines Gärgases Fettsäuren und ähnliche Stoffe. Diese Stoffe werden in den nächsten Stufen zunächst zu Essigsäure, Wasserstoff, Kohlendioxid abgebaut. Daraus bilden die methanbildenden Bakterien Biogas mit hohem Methangehalt, welches vielfältige Verwendungsmöglichkeiten hat.

Das Wachstum der Bakterien läuft in den einzelnen Stufen mit unterschiedlichen Geschwindigkeiten und unter unterschiedlichen Optimalbedingungen ab. Die Organismen, die die Hydrolyse und saure Gärung bewirken, wachsen im leicht sauren Medium und etwa um eine Größenordnung schneller als die Bakterien der zweiten Stufe, die sich in einem fast neutralen Medium entwickeln.

Die Trennung dieser beiden Stufen ermöglicht es, jede optimal einzustellen und die Überlastung einer einstufigen Anlage, insbesondere bei einer Stoßbelastung, zu vermeiden.

Bei dieser anaeroben Behandlung der nativorganischen Fraktion werden Gärgas aus der ersten organischen Stufe mit den charakteristischen Bestandteilen Kohlendioxid und Wasserstoff erhalten. Faulgas mit den Bestandteilen Methan zu etwa 75 Vol.-% und Kohlendioxid zu etwa 25 Vol.-% und ein Schlamm mit einem Vitamin-B12-reichen Überschuß werden aus der zweiten Stufe, dem Faulreaktor, erhalten. Das Faulgas kann vorteilhafterweise der energetischen Nutzung zugeführt werden. Der Überschußschlamm mit dem Vitamin-B12-reichen Überschuß aus dem Faulreaktor kann vorteilhafterweise als Dünger oder sogar als Futterzusatz eingesetzt werden. Der anaerob ausgefaulte Schlamm wird aus dem Reaktor abgezogen, entwässert und einer Kompostierung zugeführt.

Das Wasser aus der Schlammentwässerung und das Faulwasser werden wieder dem Stofflöser als Prozeßwasser zugeführt. Ein Teilstrom des Faulwassers mit noch einer organischen Restbelastung wird ausgeschleust. Die Restbelastung des Faulwassers entspricht der kommunaler Abwässer. Damit das Reaktorvolumen in der Anaerobstufe möglichst klein gehalten wird, wird die aus dem Stofflöser abgezogene Suspension bis auf 15 Gew.-% Wassergehalt vorentwässert.

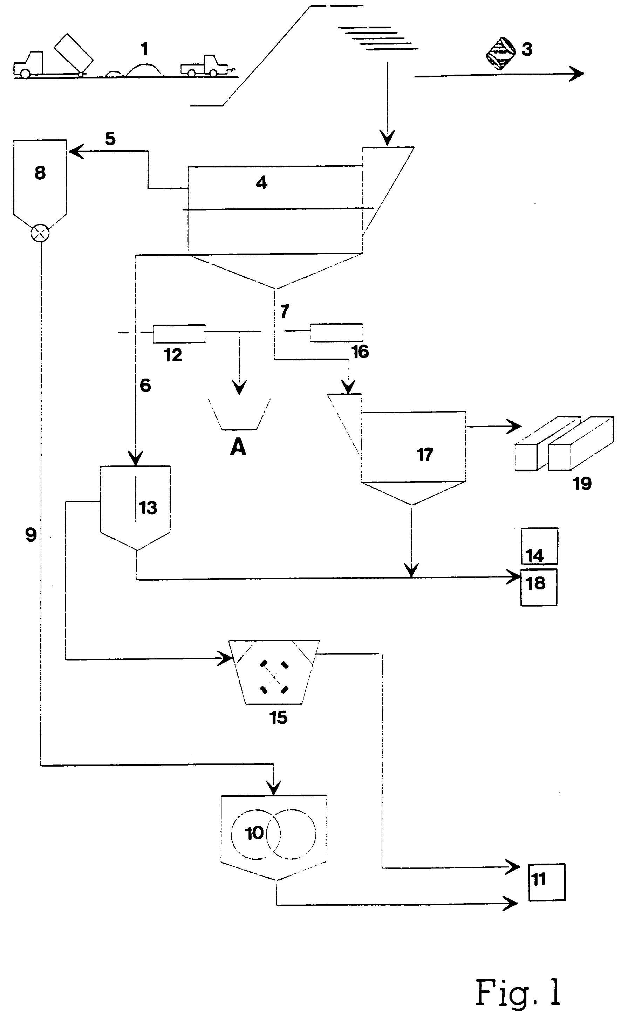

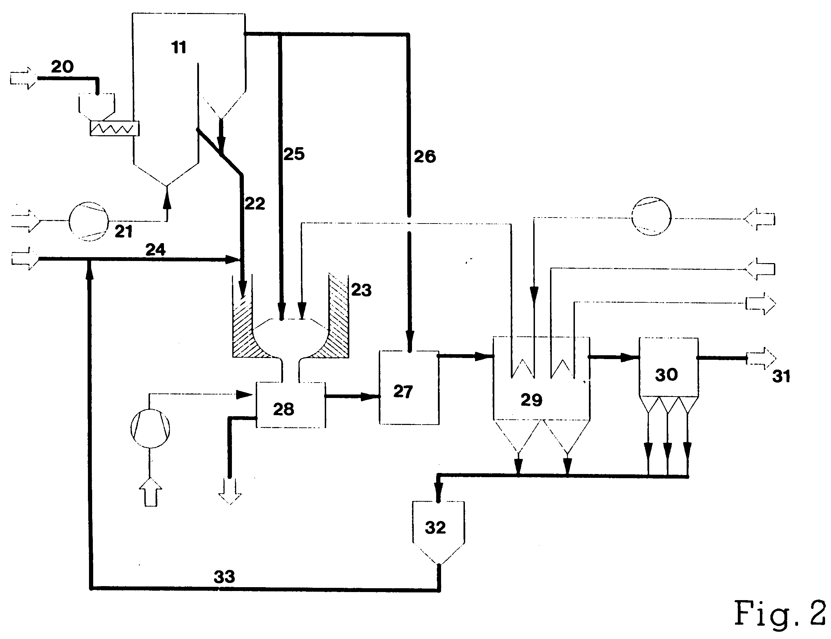

Die Erfindung wird anhand einer Zeichnung und eines Beispiels näher erläutert. Die Zeichnung besteht aus Fig. 1 mit Fig. 2.

Fig. 1    zeigt ein Verfahrensschema zur Trennung des Abfalls in drei Fraktionen, nämlich eine Feinfraktion, eine Grobfraktion und eine Leichtfraktion.

Fig. 2    zeigt ein Verfahrensschema zur Vergasung der Leichtfraktion und Grobfraktion und zur Einschmelzung des Rückstandes aus der Vergasung.

In Fig. 1 ist dargestellt, daß der Abfall in einem Flachbunker (1) abgeladen wird. Aus dem Flachbunker kommt der Abfall auf ein Stangensieb (2). Dabei werden Störstoffe (3) abgetrennt und abgeführt. Das von Störstoffen (3) befreite Material wird auf eine sogenannte ASS-Trommel (4) gegeben. In der Trommel erfolgt eine Trennung des Materials in eine Leichtfraktion, eine Grobfraktion und eine Feinfraktion. Die Leichtfraktion wird über die Leitung (5) in einen Zyklon geleitet (8). Aus dem Zyklon (8) wird die Leichtfraktion über die Leitung (9) in einen Walzenschneider (10) geleitet und von dort in die Vergasung (11) abgeführt. Die Grobfraktion wird von eisenhaltigen Bestandteilen in einem Eisenabscheider (12) abgetrennt und über die Leitung (6) in einen Sichter (13) eingeleitet. Feine Bestandteile der Grobfraktion werden aus dem Sichter (13) in die Einschmelzung (14) abgeführt. Grobe Bestandteile der Grobfraktion werden in eine Hammermühle (15) eingeleitet und von dort in die Vergasung (11) abgeführt. Die Feinfraktion wird in einem Eisenabscheider (16) von eisenhaltigen Bestandteilen abgetrennt und über die Leitung (7) auf ein Feinsieb (17) geleitet. Die eisenhaltigen Bestandteile werden im Behälter (A) gesammelt. Im Feinsieb (17) erfolgt eine Trennung der Feinfraktion, wobei die Bestandteile der Feinfraktion mit einer Korngröße < 15 mm in die Einschmelzung (14) oder in die anaerobe Oberfläche Fermentation (18) abgeführt werden. Die Bestandteile der Feinfraktion mit einer Korngröße > 15 mm werden aus dem Feinsieb (17) in die Kompostierung (19) abgeführt.

In Fig. 2 wird die Vergasung und Einschmelzung dargestellt. Dabei wird das Material über die Leitung (20) in den Vergaser (11) eingeleitet. Vergasungsmittel werden als Fluidisierungsgas über die Leitung (21) in den Vergaser (11), der eine Wirbelschicht ist, eingeleitet. Über die Leitung (22) wird der feste Rückstand in den Schmelzofen (23) eingeleitet. Die Feinstfraktion mit einer Korngröße < 15 mm wird über die Leitung (24) mit dem Material in der Leitung (22) vereinigt und in den Schmelzofen (23) eingeleitet. Das Abgas aus dem Vergaser (11) wird in die Teilströme (25 und 26) geteilt. Der Teilstrom (25) wird in den Einschmelzofen (23) eingeleitet. Der Teilstrom (26), der nur das Restgas darstellt, wird in eine Nachbrennkammer (27) eingeleitet. Unterhalb des Einschmelzofens (23) ist ein Naßentschlacker (28) angeordnet. Aus dem Naßentschlacker (28) wird der Rückstand als Schlackengranulat gewonnen. Das Abgas aus der Nachbrennkammer (27) wird in einen Abhitzekessel (29) geleitet. In dem Abhitzekessel (29) wird Luft vorgewärmt, die dann in den Einschmelzofen (23) eingeleitet wird. Das Abgas aus dem Abhitzekessel (29) wird in einen Elektrofilter (30) eingeleitet und von dort in eine konventionelle Rauchgasreinigungsanlage (31) überführt und dann als gereinigtes Gas abgeführt. Der Rückstand aus dem Abhitzekessel (29) und Elektrofilter (30) wird in einen Aschesammler (32) eingeleitet und von dort über die Leitung (33) mit der Feinstfraktion, die in der Leitung (24) geführt wird, vereinigt und als vereinigte Fraktion mit dem Rückstand aus dem Vergaser (11), der über die Leitung (22) geführt wird, in den Einschmelzofen (23) eingeleitet.

**Beispiel**

100 kg Hausmüll wurden in eine Sortiertrommel, die aus der deutschen Patentschrift Nr. 28 49 509 bekannt ist, gegeben. Der Hausmüll hatte die in der nachstehend aufgeführten Tabelle verzeichnete Zusammensetzung. Die in der Sortiertrommel abgesaugte Leichtfraktion betrug 35,1 Gew.-% des eingesetzten Hausmülls. Die Zusammensetzung der erhaltenen Leichtfraktion ist in der nachstehend aufgeführten Tabelle dargelegt. Die Leichtfraktion wies eine durchschnittliche Korngröße von 200 mm auf. Die Leichtfraktion wurde auf eine mittlere Korngröße von < 50 mm in einer Schneidmühle zerkleinert. Die zerkleinerte Leichtfraktion wies eine mittlere Dichte von 50 kg/m$^3$ auf.

Der Siebdurchgang betrug 45,3 Gew.-% des eingesetzten Hausmülls nach der Entschrottung. Die Zusammensetzung des Siebdurchgangs und damit der Feinfraktion wird in der nachstehend aufgeführten Tabelle dargelegt. Die Feinfraktion wies eine Korngröße von < 60 mm auf.

Die Feinfraktion wurde nachgesiebt, wobei eine Fraktion mit einer Korngröße von < 10 mm abgetrennt wurde. Die Fraktion < 10 mm umfaßte 14,3 Gew.-% des eingesetzten Hausmülls. Die Feinfraktion mit einer Korngröße von > 10 mm bis < 60 mm wurde der Kompostierung zugeleitet.

Der Siebüberlauf und damit die Grobfraktion machte 15,2 Gew.-% des eingesetzten Hausmülls nach der Entschrottung aus. Die Zusammensetzung des erhaltenen Siebüberlaufs wird in der nachstehend aufgeführten Tabelle dargelegt. Die Grobfraktion wurde nach einem ballistischen Abscheiden anorganischer Grobteile in einer Hammermühle auf eine mittlere Korngröße von < 50 mm zerkleinert. Der aus dem Siebdurchgang und dem Siebüberlauf abgetrennte Schrott, insgesamt 4,4 Gew.-%, wurde an die stahlerzeugende Industrie abgegeben.

Die Leicht- und die Grobfraktion wurden bei einer Maschengröße < 5 mm abgesiebt. Die Leichtfraktion mit einer Korngröße von < 5 mm wurde über eine wassergekühlte Schnecke und die Grobfraktion mit einer Korngröße von < 5 mm wurde mechanisch in einen 2 m hohen Reaktor der zirkulierenden Wirbelschicht eingetragen. Die zirkulierende Wirbelschicht wurde auf eine Temperatur von 900°C eingestellt. In die zirkulierende Wirbelschicht wurden 25,1 kg Leichtfraktion und 8,3 kg Grobfraktion eingetragen. Es wurden 5,0 kg Rückstand erhalten. Nach der Entstaubung wurden die folgenden Gase mit den folgenden Anteilen in dem austretenden Gasgemisch gemessen:

12,6 Vol.-% Kohlendioxid

11,7 Vol.-% Kohlenmonoxid

17,1 Vol.-% Wasserdampf

11,9 Vol.-% Wasserstoff

2,3 Vol.-% Methan und Kohlenwasserstoffe

44,4 Vol.-% Stickstoff

Die Vergasungsrückstände wurden zusammen mit der Fraktion < 10 mm bei einer Temperatur von über 1300°C in einem Schmelzofen eingeschmolzen.

Eingesetzter Hausmüll
=====================

<u>Abgetrennte Fraktionen</u>

| Bestandteile | Gew.-% | Leichtfraktion < 50 mm Gew.-% | Feinfraktion/ Siebdurchgang < 60 mm Gew.-% | Grobfraktion/Siebüberlauf nach anschließender Zerkleinerung auf < 50 mm Gew.-% | aus der Fein- und Grobfraktion abgetrennter Schrott Gew.-% |
|---|---|---|---|---|---|
| Papier, Pappe | 27,3 | 24,4 | 3,5 | 0 | 0 |
| Kunststoffe | 5,7 | 1,6 | 0,5 | 3,2 | 0 |
| Holz, Gummi, Textilien | 6,2 | 4,2 | 0 | 2,1 | 0 |
| Biomasse | 31,8 | 3,8 | 23,5 | 5,3 | 0 |
| Glas | 7,5 | 0 | 3,5 | 4,1 | 0 |
| Metalle | 6,3 | 0 | 0 | 0,5 | 4,4 |
| Feinmaterial | 15,2 | 1,1 | 14,3 | 0 | 0 |
| Summe | 100 | 35,1 | 45,3 | 15,2 | 4,4 |

**Patentansprüche**

1.  Verfahren zur rückstandsfreien Abfallbehandlung, bei dem
    a) der Abfall in drei Fraktionen getrennt wird, wobei eine Feinfraktion mit einer Korngröße von < 100 mm als Siebdurchgang ausgetragen, eine Grobfraktion als Siebüberlauf erhalten und eine Leichtfraktion abgesaugt wird,
    b) die Feinfraktion gemäß Verfahrensstufe (a) der Kompostierung zugeführt wird,
    c) die Leichtfraktion gemäß Verfahrensstufe (a) auf eine Korngröße < 100 mm zerkleinert und anschließend in den gasförmigen Zustand überführt wird,
    d) die Grobfraktion gemäß Verfahrensstufe (a) von eisenhaltigen Stoffen befreit, von Schwerstoffen befreit, auf eine Korngröße von < 100 mm zerkleinert und anschließend in den gasförmigen Zustand überführt wird,
    e) die Gase aus den Stufen der Vergasung gemäß den Verfahrensstufen (c) und (d) gewonnen werden,
    f) die Rückstände aus der Vergasung gemäß den Verfahrensstufen (c) und (d) eingeschmolzen werden.

2.  Verfahren nach Anspruch 1, dadurch gekennzeichnet, daß die Feinfraktion mit einer Korngröße von < 60 mm ausgetragen wird.

3.  Verfahren nach den Ansprüchen 1 oder 2, dadurch gekennzeichnet, daß die Feinfraktion gemäß Verfahrensstufe (a) vor der Kompostierung einer weiteren Siebung unterzogen wird, wobei Material mit einer Korngröße von < 15 mm abgesiebt und eingeschmolzen wird.

4.  Verfahren nach den Ansprüchen 1 bis 3, dadurch gekennzeichnet, daß die Leichtfraktion gemäß Verfahrensstufe (c) und die Grobfraktion gemäß Verfahrensstufe (d) auf eine Korngröße < 50 mm zerkleinert werden.

5.  Verfahren nach den Ansprüchen 1 bis 4, dadurch gekennzeichnet, daß die Vergasung gemäß den Verfahrensstufen (c) und (d) im System einer stationären oder zirkulierenden Wirbelschicht erfolgt.

6.  Verfahren nach den Ansprüchen 1 bis 5, dadurch gekennzeichnet, daß in das System der stationären oder zirkulierenden Wirbelschicht als Fluidisierungsgas Luft, mit Sauerstoff angereicherte Luft oder technischer Sauerstoff eingeleitet werden.

7.  Verfahren nach den Ansprüchen 1 bis 6, dadurch gekennzeichnet, daß die Vergasungstemperatur gemäß den Verfahrensstufen (c) und (d) 800°C bis 1000°C beträgt.

8.  Verfahren nach den Ansprüchen 1 bis 7, dadurch gekennzeichnet, daß die Vergasungstemperatur gemäß den Verfahrensstufen (c) und (d) 850°C bis 950°C beträgt.

9.  Verfahren nach den Ansprüchen 1 bis 8, dadurch gekennzeichnet, daß die Leichtfraktion gemäß Verfahrensstufe (a) in Abwandlung der Verfahrensstufe (c) nach einer Zerkleinerung pyrolysiert wird, und die Grobfraktion gemäß Verfahrensstufe (a) in Abwandlung der Verfahrensstufe (d) nach der Abtrennung von eisenhaltigen Stoffen und Schwerstoffen und der Zerkleinerung pyrolysiert wird.

10. Verfahren nach Anspruch 9, dadurch gekennzeichnet, daß die Pyrolyse in einem von außen beheizten Drehrohr bei einer Temperatur von 400 bis 900°C, vorzugsweise 450 bis 550°C, durchgeführt wird.

11. Verfahren nach Anspruch 9, dadurch gekennzeichnet, daß die Pyrolyse im System einer stationären Wirbelschicht bei einer Temperatur von 400 bis 900°C, vorzugsweise von 450 bis 550°C, durchgeführt wird.

12. Verfahren nach den Ansprüchen 1 bis 11, dadurch gekennzeichnet, daß ein Teilstrom des Abgases aus der Vergasung gemäß den Verfahrensstufen (c) und (d) in die Einschmelzung gemäß Verfahrensstufe (f) eingeleitet wird und das Restgas aus der Vergasung verbrannt wird.

**13.** Verfahren nach den Ansprüchen 1 bis 12, dadurch gekennzeichnet, daß die Vergasung soweit im Druckbetrieb durchgeführt wird, daß das Produktgas ohne zusätzliche Druckerhöhung in einen Einschmelzofen und/oder in eine Brennkammer eingeleitet und verbrannt wird.

**14.** Verfahren nach den Ansprüchen 1 oder 2 und 4 bis 13, dadurch gekennzeichnet, daß die Feinfraktion gemäß Verfahrensstufe (a) vor der Kompostierung einer weiteren Siebung unterzogen wird, wobei Material mit einer Korngröße < 15 mm abgesiebt, von inerten Bestandteilen befreit und anaerob fermentiert wird.

Fig. 1

Fig. 2